Europäisches Patentamt

European Patent Office

Office européen des brevets

(19)

(11) Numéro de publication : **0 117 815**
**B1**

(12) **FASCICULE DE BREVET EUROPÉEN**

(45) Date de publication du fascicule du brevet :
30.07.86

(21) Numéro de dépôt : **84400357.4**

(22) Date de dépôt : **22.02.84**

(51) Int. Cl.⁴ : **F 16 D 55/32**, F 16 D 55/224

(54) **Système de freinage comprenant au moins un disque de frein coulissant et disque de frein pour un tel système de freinage.**

(30) Priorité : 25.02.83 FR 8303134

(43) Date de publication de la demande :
05.09.84 Bulletin 84/36

(45) Mention de la délivrance du brevet :
30.07.86 Bulletin 86/31

(84) Etats contractants désignés :
DE GB IT SE

(56) Documents cités :
DE-A- 2 517 317
FR-A- 1 319 456
GB-A-   583 596
GB-A- 1 087 988
GB-A- 2 021 218
GB-A- 2 049 845
US-A- 2 985 259
US-A- 2 997 138
US-A- 4 371 059

(73) Titulaire : **BENDIX France**
**126, rue de Stalingrad**
**F-93700 Drancy (FR)**

(72) Inventeur : **Meynier, Guy**
**58 rue de Reims**
**93600 Aulnay S/Bois (FR)**

(74) Mandataire : **Le Moenner, Gabriel et al**
**SERVICE BREVETS BENDIX 44, Rue François 1er**
**F-75008 Paris (FR)**

Jouve, 18, rue St-Denis, 75001 Paris, France

## Description

L'invention a pour objet un système de freinage comprenant au moins un disque de freinage coulissant axialement sur un organe d'entraînement en rotation cannelé, notamment pour véhicules automobiles et un disque de freinage pour un tel système de freinage.

L'invention concerne en particulier un système de freinage du type frein à disque dans lequel l'étrier comporte un moteur de frein susceptible de provoquer directement l'engagement de friction d'un élément de friction contre une première face d'un disque tournant et de provoquer indirectement l'engagement de friction d'un second élément de friction au travers du disque coulissant sur un organe d'entraînement en rotation cannelé.

On connaît du Brevet US 2985259 un système de freinage du type défini, ci-dessus, dans lequel un étrier fixe reçoit en coulissement et en ancrage trois éléments de friction, entre lesquels sont interposés des disques coulissants sur un organe d'entraînement en rotation. Dans ce type de système de freinage, en particulier lorsqu'il est destiné à des véhicules lourds le disque coulissant doit assurer la capacité de freinage nécessaire et la dissipation de chaleur correspondante. Ceci entraîne que le disque coulissant est massif et lourd. Comme conséquence du poids du disque, celui-ci risque de glisser sur l'arbre d'entraînement lorsque le véhicule prend un virage ou lorsqu'il est soumis à des vibrations dues à un mauvais revêtement de sol. Ce mouvement de disque peut entraîner des freinages intempestifs dûs à l'application du disque sur l'élément de friction correspondant au sens de déplacement du disque. De plus, le disque est susceptible de repousser le piston du moteur de frein hydraulique et par conséquent de provoquer un accroissement de la course de la pédale de frein, accroissement pouvant aller jusqu'à une perte de freinage. Une solution à ce problème a été proposée dans la demande de Brevet Français n° 7912 003 publiée sous le n° 2425581. Cette solution propose un dispositif à béquille empêchant le mouvement du disque vers le piston de frein et par conséquent évitant les problèmes d'alongement pédale mentionnés ci-dessus. Cette solution présente néanmoins deux inconvénients majeurs, d'une part rien n'empêche le disque de se déplacer dans le sens opposé au piston et donc de s'appliquer sur l'autre élément de friction, provoquant ainsi des freinages intempestifs, de plus la genouillère empêchant le retour du disque maintient ce freinage intempestif aussi longtemps que la garniture de friction n'a pas présentée une usure supplémentaire libérant le disque ; d'autre part lors du changement des éléments de friction la béquille empêche le déplacement volontaire du disque et nécessite un outillage particulier permettant de rendre inopérant l'embrayage à béquille.

L'invention a pour objet un système de freinage dans lequel de tels inconvénients sont évités.

Dans ce but l'invention propose un système de freinage comprenant au moins un disque de freinage susceptible d'être freiné au moyen d'éléments de friction ledit disque étant monté coulissant axialement sur un organe d'entraînement en rotation caractérisé en ce que ledit disque comporte un dispositif de rappel et de mémorisation de position permettant audit disque d'être toujours à une même distance prédéterminée par rapport à l'un des éléments de friction, lorsque le freinage n'est pas appliqué, quel que soit l'état d'usure dudit élément de friction.

Il apparaît ainsi que grâce à l'invention, le disque comporte un dispositif de mémorisation de position empêchant celui-ci de repousser le piston et donc de provoquer des pertes pédales d'une part et d'autre part le disque comporte un dispositif de rappel empêchant le disque d'être en engagement de friction avec l'élément de friction opposé au piston, lorsque le freinage n'est pas appliqué, ceci pour empêcher tout freinage intempestif.

Un autre objet de l'invention consiste à utiliser le disque coulissant comportant le dispositif de rappel et de mémorisation en association avec un deuxième disque fixe l'étrier étant un étrier coulissant et le disque coulissant étant placé du côté du moteur de frein de l'étrier de manière à limiter le mouvement de l'étrier coulissant au fur et à mesure de l'usure des éléments de friction.

Un troisième objet de l'invention consiste à avoir le disque coulissant démontable de son arbre cannelé avec son dispositif de rappel et de mémorisation qui reste solidaire avec le disque même lorsque celui-ci est démonté de son arbre cannelé permettant ainsi d'avoir un ensemble démontable en bloc.

On décrira maintenant à titre d'exemple non limitatif un mode de réalisation préféré de l'invention en se référant aux dessins annexés dans lesquels :

la figure 1   est une vue en bout d'un système de freinage selon l'invention ;

la figure 2   est une vue de dessus du système de freinage de la figure 1 dont certaines parties ont été représentées en coupe ;

la figure 3   est une vue en coupe suivant la ligne 3-3 du système de freinage représenté sur la figure 1 ;

la figure 4   est une vue partielle agrandie du dispositif de rappel et de mémorisation représenté sur la figure 3 ;

la figure 5   est une vue en coupe partielle suivant la ligne 5-5 de la figure 3, l'étrier et les éléments de friction ayant été retirés ;

la figure 6   est une vue axiale agrandie d'un autre mode de réalisation du ressort annulaire de friction.

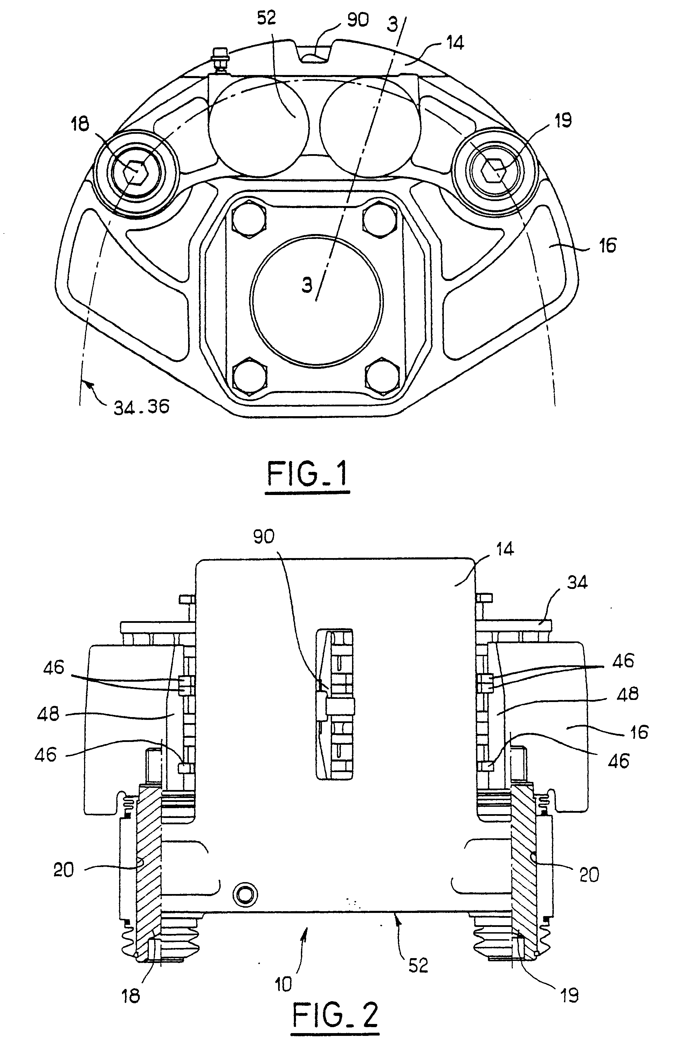

Le système de freinage représenté sur les figures 1, 2 et 3, comporte un frein à disque désigné dans son ensemble par la référence 10 et un ensemble tournant désigné dans son ensemble par la référence 12. Le frein à disque 10 comporte de façon conventionnelle un étrier 14 monté coulissant sur un support fixé 16 au moyen de deux colonnettes axiales 18 et 19 fixées dans le support fixe 16 et passant par des alésages 20 formés dans l'étrier 14. De façon conventionnelle le support fixe 16 est associé à une partie fixe du véhicule (non représentée).

L'ensemble tournant 12 est associé à une roue du véhicule (non représentée). Cet ensemble tournant 12 est constitué par un moyeu de roue 22 qui porte un moyeu fixe de disque 24 et un moyeu coulissant de disque 26. Le moyeu fixe 24 est lié en rotation et en translation au moyeu 22 à l'aide de vis 28 circonférentiellement réparties. Le moyeu coulissant 26 est solidaire en rotation du moyeu 22 grâce à des cannelures 30 formées sur le moyeu 22 et pénétrant dans des rainures 32 formées dans le moyeu 26. Le moyeu coulissant 26 étant susceptible de se déplacer axialement le long des cannelures 30. Chacun des moyeux 24 et 26 porte un disque de freinage respectivement 34 et 36 fixé sur le moyeu correspondant au moyen de vis 38'.

Le frein 10 comporte des éléments de friction placés entre les disques 34 et 36. Plus précisément, le frein à disque 10 comporte 4 éléments de friction, un premier élément de friction 38 fixé sur l'étrier 14 au moyen de vis 40. Un deuxième et un troisième élément de friction respectivement 42 et 44 placés dos à dos entre les disques 34 et 36 et supportés par des oreilles 46 sur des surfaces de coulissement 48 formées sur le support fixe 16. Enfin un quatrième élément de friction 50 placé entre le disque 36 et un moteur de frein 52 solidaire de l'étrier. L'élément de friction 50 est également supporté par les surfaces de coulissement 48 du support fixe 16 au moyen d'oreilles 46 d'une façon similaire aux éléments de friction 42 et 44. Sur le mode de réalisation représenté le moteur de frein 52 est double, chacune des moitiés comprenant un piston 54 monté coulissant dans un alésage 56 formé dans l'étrier 14, le piston 54 étant sensible à une pression régnant dans une chambre 58 susceptible d'être reliée à une source de pression hydraulique comme par exemple le maître cylindre du véhicule (non représenté).

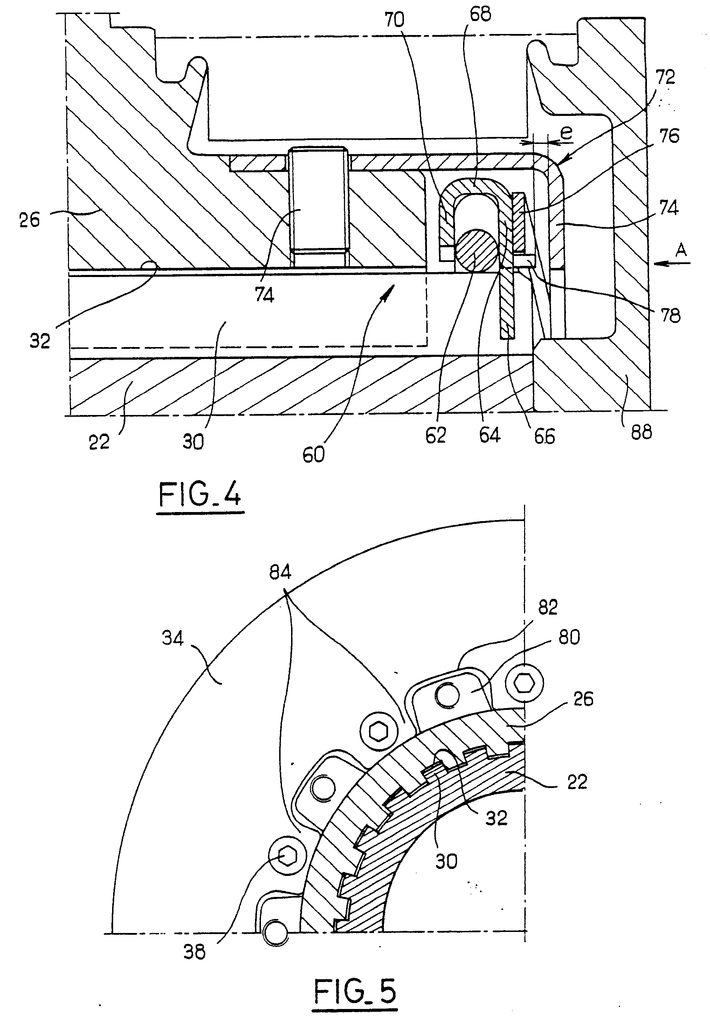

Selon l'invention le système de freinage comporte un dispositif de rappel et de mémorisation de position désigné dans son ensemble par la référence 60 placé à une extrémité du moyeu coulissant 26. En se reportant à la figure 4 où le dispositif de rappel et de mémorisation 60 est représenté agrandi, on voit que celui-ci comporte un ressort annulaire ondulé 62 monté avec frottement sur les cannelures 30 du moyeu 22, le ressort annulaire étant maintenu axialement par une cage 64 l'ensemble ressort 62 et cage 64 formant bague de friction. La cage 64 comporte des languettes 66 pénétrant dans les rainures du moyeu 22 de façon à être solidaire en rotation du moyeu 22 mais pouvoir se déplacer axialement par rapport à celui-ci. La cage 64 comporte également une portion repliée 68 qui d'une part maintient radialement le ressort ondulé et assure la précontrainte sur les cannelures mais également maintient celui-ci axialement au moyen d'une deuxième série de languettes 70. Le dispositif 60 comporte également un manchon 72 solidaire du moyeu 26 et donc du disque 36 au moyen d'au moins une vis 74. Ce manchon formant une portion solidaire du disque. Comme on le voit sur la figure 4, ce manchon 72 comporte une portion rabattue radialement 74. Entre cette portion 74 et la cage 64 est placé un ressort annulaire ondulé prenant appui alternativement sur la cage 64 et la portion rabattue 74 de manière à solliciter en écartement celles-ci, ce ressort 76 formant l'élément élastique qui sollicite en écartement ladite cage 64 et la portion 72 solidaire du disque 36. La cage 64 comporte en outre une troisième série de languettes 78 rabattues axialement vers la droite en se référant à la figure 4, qui définit une distance e entre l'ensemble bague de friction et portion solidaire du disque 36. Cette distance e est prédéterminée au moyen de la longueur des languettes 78. Selon l'invention, l'effort axial du ressort 76 est impérativement inférieur à la traînée axiale engendrée par le frottement du ressort annulaire 62 sur les cannelures 30 de manière à ce que le manchon 72 n'entraîne la cage 64 et le ressort 62 que lorsque la distance e devient nulle, c'est-à-dire lorsque la portion rabattue 74 vient en contact avec les languettes 78.

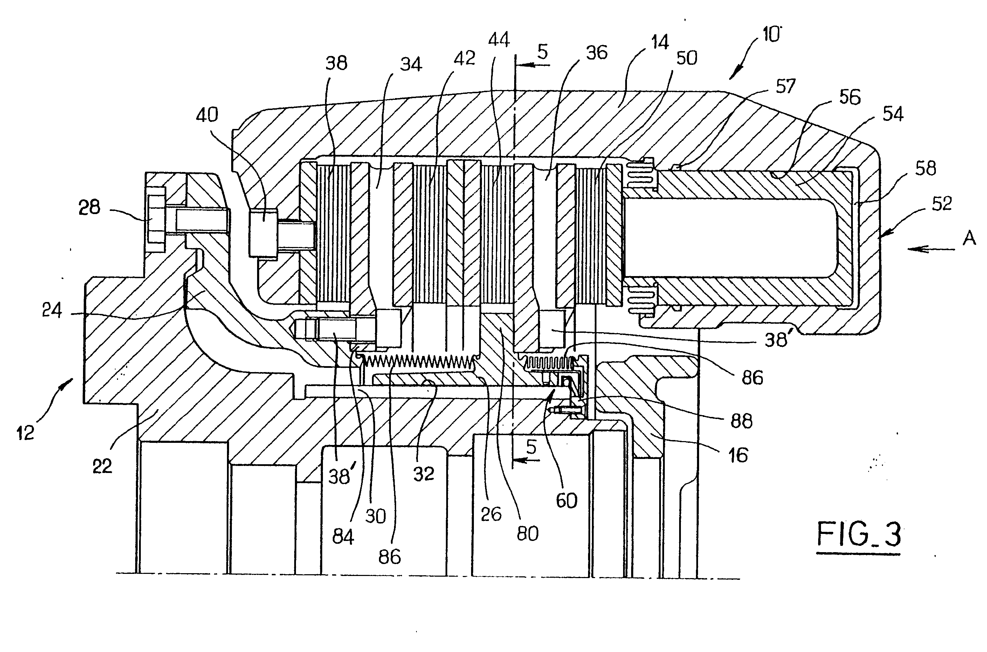

En se référant à la figure 5 on voit que le moyeu coulissant 26 présente des oreilles 80 taraudées dans lesquelles sont montées les vis 38' pour fixer le disque 36. Le disque 34 présente une série de découpes 82 et une série d'oreilles 84, les découpes 82 étant plus grandes que les oreilles 80 du moyeu 26 les oreilles 84 étant placées entre deux découpes 82 successives et permettant le montage du disque 34 sur le moyeu 24 au moyen de vis 38'. En se reportant à la figure 3 on voit que des soufflets de protection 86 ont été montés entre les moyeux 24 et 26 d'une part et entre le moyeu 26 et une partie 88 solidaire du moyeu 22.

Enfin, en se référant à la figure 2 on voit que un ressort 90 placé sur l'étrier 14 sollicite radialement les éléments de friction 42, 44 et 50 en appui sur les surfaces de coulissement 48 portées par le support fixe 16.

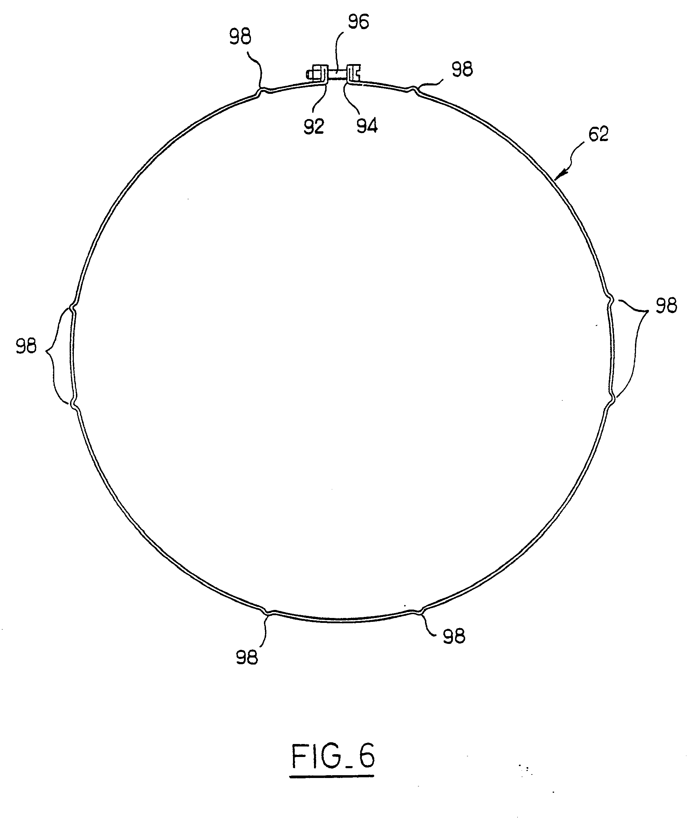

En se référant à la figure 6 qui représente un autre mode de réalisation du ressort ondulé de frottement 62 on voit que le ressort 62 est formé par une bande de métal dont les extrémités 92 et 94 sont repliées radialement vers l'extérieur de manière à pouvoir placer entre ces deux extrémités un boulon 96, permettant de régler le frottement voulu sur les cannelures 30. La bande de métal présente des ondulations locales 98 permettant d'assurer une élasticité circonférentielle maintenant le frottement sensiblement constant après le réglage de celui-ci, comme dans le mode de réalisation précédent ce ressort 62 est placé dans la cage 64.

Le frein qui vient d'être décrit à l'aide des figures 1 à 6 fonctionne de la façon suivante :

Lorsque du liquide sous pression est admis dans la chambre 58 le piston 54 se déplace dans le sens de la flèche A de la figure 3 par rapport à l'étrier 14. Le piston 54 applique l'élément de friction 50 sur le disque 36. Celui-ci sous l'effet de la poussée du piston 54 se déplace également dans le sens de la flèche A à l'encontre du ressort 76. Le disque 36 déplace les éléments de friction 44 à 42 également dans le sens de la flèche A jusqu'à ce que l'élément de friction 42 vienne en appui sur le disque 34 fixe. Par réaction l'étrier 14 se déplace dans le sens inverse de la flèche A et applique l'élément de friction 38 sur l'autre face du disque 34, l'étrier pouvant coulisser sur ces colonnettes 18 et 19. Tant que le déplacement du disque 44 reste inférieur à la valeur e existant entre la cage 64 et le manchon 72, le ressort 62 et la cage 64 restent immobiles. Au relâchement du freinage, c'est-à-dire lorsque la pression décroît dans la chambre 58, d'une façon conventionnelle le joint 57 du piston 54 fait revenir le piston 54 dans le sens contraire de la flèche A d'une valeur connue, le disque 36 sollicité par le ressort 76 au travers du manchon 72 est repoussé vers la droite en se référant à la figure 3 jusqu'à ce que le jeu e soit rétabli à nouveau. Le disque 36 s'éloigne donc du disque 34 et de l'élément de friction 44 d'une valeur connue qui correspond à la valeur e.

Si lors d'un freinage ultérieur l'usure des éléments de friction 42 et 44 est telle que la portion rabattue 74 vienne en contact avec les languettes 78, l'ensemble bague de friction composé du ressort 62 et de la cage 64 se déplace dans le sens de la flèche A (voir figure 4) d'une valeur égale à l'usure des éléments 42 et 44 qui doit être rattrapée. Au relâchement du freinage le ressort 76 repoussera à nouveau le disque d'une valeur e dans le sens contraire de la flèche A mais à partir d'une nouvelle position de la cage 64 qui elle aura progressée dans le sens de la flèche A. On conserve ainsi lorsque le frein n'est pas appliqué un jeu constant entre les disques 36 et 34 le joint 57 assurant par ailleurs un jeu entre les éléments de friction 38 et 50 ce qui permet de supprimer tous les couples résiduels sur les quatres éléments de friction.

Le montage du système de freinage décrit précédemment s'effectue de la manière suivante :

Le véhicule est préalablement équipé du support fixe 16 monté sur une partie fixe du véhicule (non représentée). On procède alors au montage du dispositif de rappel et de mémorisation de position sur le moyeu coulissant 26. Pour cela le ressort 62 est monté dans la cage 64 puis placé en bout de moyeu coulissant 26. On place alors le ressort 76 que l'on vient coiffer par le manchon 72 qui est alors monté sur l'extrémité du moyeu 26. On place la vis 74 de manière à immobiliser le manchon 72 par rapport au moyeu 26. On procède alors à l'assemblage de l'ensemble tournant 12. Le moyeu 22 est équipé du moyeu fixe 24 au moyen des vis 28. Les rainures 32 du moyeu 26 sont alors présentées en face des cannelures 30 du moyeu 22. Par déplacement du moyeu 26 dans le sens de la flèche A de la figure 3 par rapport au moyeu 26 on enfile les cannelures 30 jusqu'à ce que celles-ci viennent à proximité de la cage 64 et du ressort 62. En s'assurant que les languettes 66 se présentent bien entre les cannelures 30, on peut faire progresser le moyeu 26 sur les cannelures 30, le ressort 62 monte alors sur les cannelures 30 et comme il est tenu entre ces cannelures 30 et la portion 68 de la cage 64 le ressort est contraint et assure un frottement sur les cannelures 30. On place alors le moyeu 26 dans la position initiale désirée. On procède alors à la mise en place des capuchons de protection 86 d'une part entre les moyeux 24 et 26 et d'autre part entre le moyeu 26 et la pièce 88 solidaire du moyeu 22. On procède alors au montage du disque 34. En se reportant aux figures 3 et 5, on voit que le disque 34 grâce aux découpes 82 peut se déplacer axialement par-dessus le moyeu 26. En s'assurant que les découpes 82 sont bien placées en vis-à-vis des saillies 81 du moyeu 26 on déplace le disque 34 dans le sens de la flèche A de la figure 3 jusqu'à ce qu'il vienne en appui sur le moyeu 24 on procède alors au montage des vis 38 pour fixer le disque 34 sur le moyeu 24. On présente alors le disque 36 sur les saillies 80 et on le fixe sur le moyeu 26 au moyen de vis 38'. L'ensemble tournant 12 peut alors être mis en place sur le véhicule, d'une façon conventionnelle, sur le porte fusée (non représenté).

On procède alors au montage du frein. Les éléments de friction 42, 44 et 50 sont placés à proximité des disques 34 et 36 et prennent appui par leurs oreilles 46 sur les surfaces de coulissement 48 du support fixe 16. L'étrier 14 préalablement équipé de son moteur de frein et de l'élément de friction 38 vissé sur cet étrier au moyen de vis 40 est alors présenté radialement de manière à chevaucher les deux disques 34 et 36. On procède alors au montage des colonnettes 18 et 19 en les faisant passer dans les alésages 20 de l'étrier 14 puis en les vissant dans le support fixe 16 par des filetages prévus à cet effet.

L'opération de démontage du système de freinage se fait dans l'ordre inverse des opérations qui viennent d'être décrites.

Pour procéder au remplacement des éléments de friction on procède comme suit :

On dévisse une des colonnettes 18 ou 19 l'étrier est alors libre de basculer autour de la colonnette restante et on peut accéder aux éléments de friction 42, 44 et 50 qui sont restés sur le support fixe 16, en dévissant les vis 40 on enlève également l'élément de friction 38. On déplace alors le moyeu coulissant 26 dans le sens contraire à la flèche A de la figure 3 pour permettre la mise en place d'éléments de friction 42 et 44 neufs. Pour déplacer le moyeu 26 il faut vaincre l'effort de frottement du ressort 62 sur les cannelures 30 ce qui se fait aisément en tirant sur le disque 36 dans le sens contraire de la flèche A, l'extrémité droite en se référant à la figure 3 du moyeu 26 venant en appui sur la cage 64 il suffit alors de tirer sur le disque 36 avec une force supérieure à l'effort de frottement du ressort 62 sur les cannelures 30. Lorsque tous les éléments de friction sont remplacés et le piston 54 repoussé dans le fond de son alésage 56 l'étrier 14 peut être basculé à nouveau et la colonnette enlevée remise en place.

Comme on l'a compris de la description qui précède, si les disques 34 et 36 doivent être remplacés par suite d'usure, il n'est pas nécessaire de désolidariser le moyeu 26 du moyeu 22. Il suffit de démonter les vis 38' et les disques 36 et 34 peuvent être démontés sans risquer de polluer la zone de coulissement du moyeu 26. De même si l'ensemble moyeu 26 et disque 36 doit être enlevé du moyeu 22, il n'est pas nécessaire de démonter le dispositif de rappel et de mémorisation de position 60, celui-ci reste solidaire du moyeu 26 et ne risque pas d'être perdu ou endommagé.

En se reportant à la figure 3, on voit que le disque coulissant 36 et son moyeu 26 sont placés du côté du moteur de frein 52. Cette disposition permet de limiter le déplacement de l'étrier 14 dans le sens inverse de la flèche A. En effet l'étrier 14 ne se déplacera que de la valeur de l'épaisseur de garniture à user sur l'élément de friction 38. La compensation de l'usure des éléments 42 et 44 se faisant par le déplacement du disque 36 dans le sens de la flèche A le disque 36 et son moyeu 26 restant dans l'encombrement défini par le moyeu 22. Cette disposition permet donc de limiter la longueur des colonnettes 18 et 19 ainsi que les risques d'interférences de l'étrier 14 avec des parties du véhicule (non représentées) lorsque les garnitures sont usées.

Il est bien évident que l'invention n'est pas limitée aux modes de réalisation représentés, en particulier on peut prévoir plusieurs disques coulissants et tout autre réalisation de la bague de friction sans sortir pour cela du cadre de l'invention.

## Revendications

1. Système de freinage avec des moyens de rattrapage du jeu dû à l'usure, comprenant au moins un disque de freinage (36) susceptible d'être freiné au moyen d'éléments de friction (44, 50), ledit disque étant monté coulissant axialement sur un organe d'entraînement en rotation (22) caractérisé en ce que ledit disque (36, 26) comporte un dispositif de rappel et de mémorisation de position (60) permettant audit disque (36) d'être toujours à une même distance prédéterminée (e) par rapport à l'un des éléments de friction (44), lorsque le freinage n'est pas appliqué, quel que soit l'état d'usure dudit élément de friction (44).

2. Système de freinage suivant la revendication 1 caractérisé en ce que ledit dispositif de rappel et de mémorisation (60) comporte une bague de friction (62, 64) coopérant avec ledit organe d'entraînement (22) ou ledit disque (36, 26) et un élément élastique (76) sollicitant en écartement ladite bague (62, 64) et une portion (72) solidaire dudit disque (36, 26) ou dudit organe d'entraînement (22).

3. Système de freinage suivant la revendication 2 caractérisé en ce que ledit élément élastique (76) est un ressort et qu'il autorise un mouvement relatif limité (e) entre ladite portion (72) et ladite bague (62, 64) au-delà duquel ladite portion (72) entraîne en coulissement ladite bague (62, 64).

4. Système de freinage suivant la revendication 3 caractérisé en ce que ladite bague de friction (62, 64) est formée par une cage (64) maintenant axialement un ressort annulaire (62) monté avec frottement sur des cannelures (30) dudit organe d'entraînement (22) et en ce que ladite portion solidaire (72) est formée par un manchon (72) solidaire dudit disque (36, 26) et présentant une portion rabattue radialement (74) pour maintenir entre cette portion rabattue (74) et ladite cage (64) ledit ressort (76) formé par une rondelle ondulée.

5. Système de freinage suivant l'une des revendications 2 à 4 caractérisé en ce que ladite bague de friction (62, 64) engendre une traînée axiale supérieure à l'effort axial engendré par ledit élément élastique (76).

6. Système de freinage suivant la revendication 5 caractérisé en ce que des saillies (78) venues de matière avec ladite cage (64) ou ladite portion (74) limitent le mouvement relatif entre eux et assurent l'entraînement de ladite cage (64) par ladite portion rabattue (74) au-delà dudit mouvement relatif (e).

7. Système de freinage suivant l'une quelconque des revendications précédentes caractérisé en ce qu'il comporte un disque fixe (34, 24), au moins un disque coulissant (36, 26), un frein à étrier coulissant (10) susceptible de solliciter lesdits éléments de friction (38, 42, 44, 50) en engagement de friction avec lesdits disques (34, 24, 36, 26) et en ce que ledit disque coulissant (36, 26) est placé du côté du moteur de frein (52) de manière à limiter le déplacement axial dudit étrier (14) au fur et à mesure de l'usure des éléments de friction (38, 42, 44, 50).

8. Disque de freinage pour système de freinage selon l'une quelconque des revendications précédentes caractérisé en ce qu'un dispositif de rappel et de mémorisation (60) est placé à une des extrémités d'un moyeu (26) coulissant cannelé dudit disque (36, 26) et est solidaire de celui-ci même lorsque ledit disque (36, 26) n'est pas monté sur un organe d'entraînement (22).

## Claims

1. A brake system having means for readjusting any play due to wear, comprising at least one brake disk (36) adapted to be braked by means of friction members (44, 50), said disk being axially slidingly mounted on a rotary drive member (22), characterized in that said disk (36, 26) includes a position memory and return device (60) permitting said disk (36) to be always at the same predetermined distance (e) from one of the friction members (44) when there is no brake application, independent of the wear condition of said friction member (44).

2. The brake system according to claim 1, characterized in that said memory and return device (60) includes a friction ring (62, 64) cooperating with said drive member (22) or said disk (36, 26), and a resilient element (76) biasing said ring (62, 64) and a portion (72) fixed to said disk (36, 26) or said drive member (22) apart from each other.

3. The brake system according to claim 2, characterized in that said resilient element (76) is a spring and in that it enables a limited relative movement (e) between said portion (72) and said ring (62, 64) beyond which said portion (72) slidingly drives said ring (62, 64).

4. The brake system according to claim 3, characterized in that said friction ring (62, 64) is comprised of a cage (64) axially retaining an annular spring (62) mounted in frictional relationship on grooves (30) of said drive member (22), and in that said fixed portion (72) is comprised of a sleeve (72) fixed to said disk (36, 26) and having a radially rebent portion (74) for holding said spring (76) comprised of an ondulated washer between said rebent portion (74) and said cage (64).

5. The brake system according to any of the claims 2 to 4, characterized in that said friction ring (62, 64) generates an axial traction greater than the axial force generated by said resilient element (76).

6. A brake system according to claim 5, characterized in that projections (78) integral with said cage (64) or said portion (74) limit the relative movement between them and ensure that said cage (74) be driven by said rebent portion (74) beyond said relative movement (e).

7. A brake system according to any of the preceding claims, characterized in that it comprises a fixed disk (34, 24), at least one sliding disk (36, 26), a sliding brake caliper (10) adapted to bias said friction members (38, 42, 44, 50) into frictional engagement with said disks (34, 24, 36, 26), and in that said sliding disk (36, 26) is arranged adjacent the brake motor (52) such as to limit axial displacement of said caliper (14) in accordance with wear of the friction members (38, 42, 44, 50).

8. A brake disk for a brake system according to any of the preceding claims, characterized in that a memory and return device (60) is disposed at one of the extremities of a grooved sliding hub (26) of said disk (36, 26) and is fixed to the latter even if said disk (36, 26) is not mounted on a drive member (22).

**Patentansprüche**

1. Breemssystem mit Mitteln zum Nachstellen des abnutzungsbedingten Spiels, das mindestens eine Bremsscheibe (36) aufweist, die durch Reibkörper (44, 50) abbremsbar ist, wobei die Bremsscheibe axial gleitend auf einem drehbaren Antriebskörper (22) gelagert ist, dadurch gekennzeichnet, daß die Bremsscheibe (36, 26) eine Positionsrückstell- und -speicherungseinrichtung (60) aufweist, die es der Bremsscheibe (36) erlaubt, bei nicht eingerückter Bremse immer den gleichen vorgegebenen Abstand (e) bezüglich eines der Reibkörper (44), unabhängig von dessen Abnutzungszustand, einzunehmen.

2. Bremssystem nach Anspruch 1, dadurch gekennzeichnet, daß die Rückhol- und -speicherungseinrichtung (60) einen mit dem Antriebskörper (22) oder der Bremsscheibe (36, 26) zusammenwirkenden Reibring (62, 64) und ein elastisches Teil (76) aufweist, das den Reibring (62, 64) und einen mit der Bremsscheibe (36, 26) oder dem Antriebskörper (22) fest verbundenen Abschnitt (72) auf Abstand zueinander vorspannt.

3. Bremssystem nach Anspruch 2, dadurch gekennzeichnet, daß das elastische Teil (76) eine Feder ist und daß sie eine begrenzte Relativbewegung (e) zwischen dem besagten Abschnitt (72) und dem Reibring (62, 64) ermöglicht, über die hinaus der besagte Abschnitt (72) den Reibring (62, 64) gleitend mitnimmt.

4. Bremssystem nach Anspruch 3, dadurch gekennzeichnet, daß der Reibring (62, 64) von einem Käfig (64) gebildet wird, der eine ringförmige Feder (62) axial festlegt, die mit Reibschluß auf Rillen (30) des Antriebskörpers (22) angebracht ist, und daß der besagte, fest verbundene Abschnitt (72) von einer mit der Bremsscheibe (36, 26) fest verbundenen Hülse (72) gebildet wird und einen radial umgebogenen Abschnitt (74) aufweist, um zwischen diesem umgebogenen Abschnitt (74) und dem Käfig (64) die von einer gewellten Scheibe gebildete Feder (76) zu halten.

5. Bremssystem nach einem der Ansprüche 2 bis 4, dadurch gekennzeichnet, daß der Reibring (62, 64) eine axiale Zugkraft erzeugt, die größer ist als die von dem elastischen Teil (76) erzeugte axiale Kraft.

6. Bremssystem nach Anspruch 5, dadurch gekennzeichnet, daß Vorsprünge (78), die aus dem Material des Käfigs (64) oder des besagten Abschnitts (74) gebildet sind, die Relativbewegung zwischen diesen begrenzen und die Mitnahme des Käfigs (64) durch den umgebogenen Abschnitt (74) über die besagte Relativbewegung (e) hinaus sicherstellen.

7. Bremssystem nach einem der vorhergehenden Ansprüche, gekennzeichnet durch eine festgelegte Bremsscheibe (34, 24), mindestens eine gleitbare Bremsscheibe (36, 26), einen schwimmend gelagerten Bremssattel (10), der die besagten Reibkörper (38, 42, 44, 50) in Reibanlage mit den Bremsscheiben (34, 24, 36, 26) drückt, wobei die gleitend gelagerte Bremsscheibe (36, 26) auf der Seite des Bremsmotors (52) so angeordnet ist, daß sie die Axialverschiebung des Bremssattels (14) entsprechend der Abnutzung der Reibkörper (38, 42, 44, 50) begrenzt.

8. Bremsscheibe für ein Bremssystem nach einem der vorhergehenden Ansprüche, dadurch gekennzeichnet, daß eine Rückhol- und -speicherungseinrichtung (60) am einen Ende einer gerillten gleitenden Nabe (26) dieser Bremsscheibe (36, 26) angeordnet und mit dieser fest verbunden ist, selbst wenn diese Bremsscheibe (36, 26) nicht an dem Antriebskörper (22) angebracht ist.

FIG_1

FIG_2

FIG_3

0 117 815

FIG_4

FIG_5

FIG_6